# EUROPEAN PATENT APPLICATION

(11) **EP 4 563 260 A1**
(43) Date of publication of application: **04.06.2025**
(21) Application number: 24211405.6
(22) Date of filing: 07.11.2024
(51) Int. Cl.: B21D 28/02, B21D 37/18, H01M 4/04, H01M 4/139, B05C 1/06, B05C 9/04, B21D 28/22

(54) **STAMP PUNCHING OIL APPLICATOR AND METHOD FOR MANUFACTURING ELECTRODE PLATE FOR SECONDARY BATTERY USING THE SAME**

(30) Priority: 01.12.2023 KR 20230172785
(71) Applicant: SAMSUNG SDI CO., LTD., Yongin-si, Gyeonggi-do 17084 (KR)
(72) Inventor: BAE, Tae-Hwan, 17084 Yongin-Si (KR); MA, Wanjun, 17084 Yongin-Si (KR)
(74) Representative: Marks & Clerk LLP

(57) **Abstract**

A method for manufacturing electrode plate for secondary battery includes feeding an electrode plate including an active material layer and an uncoated portion to a stamp block on which a pad is formed, applying a punching oil absorbed by the pad to a partial region of the uncoated portion, and notching the electrode plate along the partial region where the punching oil is applied.

## Description

### BACKGROUND

### 1. Field

Aspects of embodiments of the present disclosure relate to a stamp punching oil applicator and a method for manufacturing an electrode plate for a secondary battery.

### 2. Description of Related Art

Unlike primary batteries that are not designed to be (re)charged, secondary (or rechargeable) batteries are batteries that are designed to be discharged and recharged. In recent years, the rapid spread of electronic devices that use batteries, such as cell phones, notebook computers, and electric vehicles has led to a significant increase in the demand for secondary batteries. In particular, research and development to improve the production capacity of lithium secondary batteries has been actively conducted in response to rising raw material prices.

Meanwhile, a manufacturing process of an electrode plate (e.g., a positive electrode plate or a negative electrode plate) in a secondary battery is an important step in a manufacturing process of the secondary battery. The manufacturing process of the electrode plate may involve coating a specific type of active material onto a surface of a substrate that serves as a current collector to improve its surface properties and enhance electrochemical reactions. In general, in order to manufacture the electrode plate, an active material slurry may be applied to a substrate of the electrode plate, and then an uncoated portion, on which the active material is not applied, may be molded into the shape of lead tabs through a notching process using a mold or a laser. Conventionally, it was common to spray a punching oil onto the entire uncoated portion to prevent adhesion during mold notching.

However, there may be problems such as excessive operating costs due to the application of the punching oil to portions (regions) that cannot be reached by the mold, long drying time for the punching oil, and a large amount of punching oil applied to a scrap generated after mold notching, which easily clogs a scrap discharge pipe.

The above information disclosed in this Background section is for enhancement of understanding of the background of the present disclosure, and therefore, it may contain information that does not constitute related (or prior) art.

### SUMMARY

A method for manufacturing an electrode plate for a secondary battery according to one or more other embodiments of the present disclosure includes feeding an electrode plate including an active material layer and an uncoated portion to a stamp block on which a pad is formed, applying a punching oil absorbed by the pad to a partial region of the uncoated portion, and notching the electrode plate along the partial region where the punching oil is applied.

According to one or more embodiments of the present disclosure, a region to which the punching oil is applied may include a cutting section, a non-electrode section, and an electrode section, and the punching oil may be applied to a partial region of the uncoated portion in the non-electrode section and a partial region of the uncoated portion in the electrode section.

According to one or more embodiments of the present disclosure, the punching oil may be applied to only a part of a boundary region between the active material layer and the uncoated portion in the electrode section.

According to one or more embodiments of the present disclosure, in the electrode section, an application pattern of the punching oil may include a corner shape.

According to one or more embodiments of the present disclosure, a width of an application pattern of the punching oil may be 3 mm or less.

According to one or more embodiments of the present disclosure, feeding the electrode plate may include adjusting a moving speed of the electrode plate based on a length of an application pattern of the punching oil, and applying the punching oil includes repeatedly applying the punching oil so that the application pattern of the punching oil is repeatedly and continuously formed.

According to one or more embodiments of the present disclosure, a secondary battery cell may include an electrode plate for a secondary battery manufactured by the method described above.

A stamp punching oil applicator for applying punching oil to an electrode plate including an active material layer and an uncoated portion according to one or more embodiments of the present disclosure includes a pump that feeds the punching oil, a pad made of a porous material and connected to the pump to absorb the punching oil, and a stamp block that supports the pad, wherein the stamp block moves up and down in a direction vertically perpendicular to a surface of the electrode plate on which the active material layer and the uncoated portion are formed, and applies the punching oil absorbed in the pad to a partial region of the electrode plate.

According to one or more embodiments of the present disclosure, punching oil may be fed in a fixed amount to the pad through the pump according to a predetermined number of applications.

According to one or more embodiments of the present disclosure, the porous material may contain polyurethane.

According to one or more embodiments of the present disclosure, the stamp block may be configured to adjust an intensity of a pressure applied to the electrode plate by a stopper.

According to one or more embodiments of the present disclosure, a width of the pad may be 3 mm or less, and a protruding thickness of the pad may be 1 mm or less.

According to one or more embodiments of the present disclosure, a region of the electrode plate applied with the punching oil may include a cutting section, a non-electrode section, and an electrode section. The pad may include parts corresponding to the cutting section, the non-electrode section, and the electrode section of the electrode plate. The stamp block may be configured to apply the punching oil to a partial region of the uncoated portion in the non-electrode section and a partial region of the uncoated portion in the electrode section via the pad.

According to one or more embodiments of the present disclosure, the stamp block may be configured to apply the punching oil only to a part of a boundary region between the active material layer and the uncoated portion in the electrode section.

According to one or more embodiments of the present disclosure, the pad may be shaped to include a corner shape.

Embodiments of the present disclosure may also provide a method of using the stamp punching oil applicator to address the above-mentioned problems.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a flowchart of an example of a method for manufacturing an electrode plate for a secondary battery according to an embodiment of the present disclosure.
FIG. 2 is a schematic diagram of a manufacturing process for an electrode plate for a secondary battery according to an embodiment of the present disclosure.
FIG. 3 is a schematic diagram of an EPC, a stamp punching oil applicator, and a notching device, according to an embodiment of the present disclosure.
FIG. 4 is a schematic diagram illustrating application of punching oil onto an electrode plate for a secondary battery by a stamp punching oil applicator according to an embodiment of the present disclosure.
FIG. 5 is a schematic diagram of notching of an electrode plate for a secondary battery by a notching device according to an embodiment of the present disclosure.
FIGS. 6 to 9 are schematic diagrams of punching oil application patterns according to various embodiments of the present disclosure.
FIG. 10 is a schematic diagram of an example of a stamp punching oil applicator according to an embodiment of the present disclosure.
FIG. 11 is a cross-sectional view of a stamp punching oil applicator along line A-A' of FIG. 10.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of " 1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In this specification, the term "lead tab" refers to a metal strip or a connection wire that is connected to a positive terminal and a negative terminal of a battery, serving to connect internal electrical/chemical reactions of the battery to an external circuit and transmit electrical energy.

Further, in this specification, the term "punching oil" refers to a substance that serves to reduce the contact friction between a mold and a metal when a metal electrode plate or a plate is notched in a molding process, thereby improving the accuracy and quality of the components.

Further, in this specification, the term "syringe pump" refers to a device including a syringe chamber and a syringe plunger designed to administer fluid at a precise volume and rate. For example, a syringe pump may refer to a screw pump, a piston pump, a velocity pump, or the like.

Further, in this specification, the term "scrap" refers to a material that is removed during the notching process or that is not part of the final product. For example, it may refer to the portion of the electrode plate or the plate that is cut off and discarded to create a particular shape or form.

Hereinafter, embodiments of the present disclosure are described below. However, the embodiments included in the present disclosure are merely examples, and the present disclosure is not limited thereto.

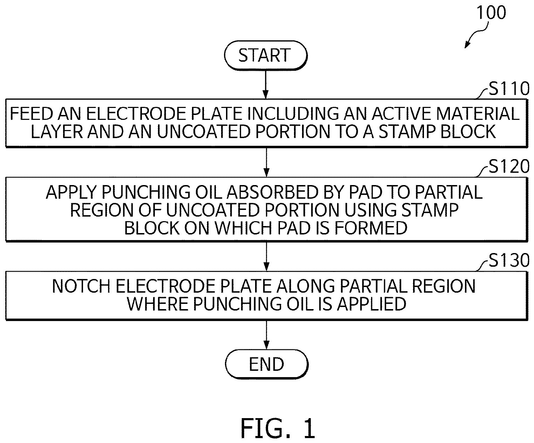

FIG. 1 is a flowchart illustrating an example of a method for manufacturing an electrode plate for a secondary battery according to an embodiment of the present disclosure.

Referring to FIG. 1, a method 100 for manufacturing an electrode plate for a secondary battery may be initiated by providing stamp blocks with an electrode plate, which has an active material layer and an uncoated portion on a substrate, between the stamp blocks (S110). The electrode plate may be provided by using a roller, and the roller may include an un-winder roller and a re-winder roller. The active material layer refers to the portion of the electrode plate where a positive electrode (cathode) active material or a negative (anode) electrode active material is coated on the substrate, and the uncoated portion refers to the remaining portion of the electrode plate where the positive electrode active material and the negative electrode active material are not coated on the substrate. In an embodiment, the method for coating the active material layer with the positive electrode active material or the negative electrode active material may be a slurry coating method in which conductive additives and binders are mixed with active materials to form a slurry, and the slurry is then applied to a surface of the substrate of the electrode plate. The stamp blocks may include a pair of blocks opposite to each other while being spaced apart from each other. The electrode plate may be provided between the pair of blocks of the stamp block.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used. The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

This is merely an example, and any positive electrode active material commonly used in the industry can be used without limitation.

The negative electrode active material may include a material that reversibly intercalates/deintercalates lithium ions, a lithium metal, a lithium metal alloy, a material capable of doping/dedoping lithium, or a transition metal oxide. The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like. The Si-based negative electrode active material or the Sn-based negative electrode active material may be used in combination with a carbon-based negative electrode active material. This is merely an example, and any negative electrode active material commonly used in the industry can be used without limitation.

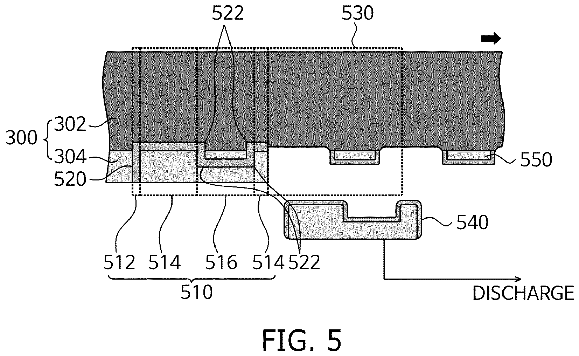

Thereafter, using the stamp blocks on which pads are respectively formed, punching oil absorbed by the pads may be applied to a partial region of the uncoated portion of the electrode plate (S120). The stamp blocks may approach the electrode plate by moving up and down (e.g., toward each other) and apply the absorbed punching oil within the pads to the electrode plate (e.g., to the uncoated portion) in a stamping manner. The location and pattern where the punching oil is applied will be described later with reference to FIG. 5.

The electrode plate may then be notched along a region where the punching oil is applied (S130). Here, notching refers to mold notching, which may include a process of cutting a metal electrode plate using a press. According to an embodiment, compared to related art, a smaller amount of punching oil may be applied to a lead tab produced after the mold notching, so that the punching oil may be dried more quickly. As a result, lead tab folding defects may be reduced, and contamination of process equipment caused by the active materials and the punching oil may be minimized. An additional process for collecting and separately treating scraps generated after notching may be performed. According to an embodiment, compared to related art, a smaller amount of punching oil may be applied to a scrap generated after the mold notching, so that post-treatment of the scrap may be performed smoothly. For example, the decrease in the amount of punching oil remaining in the scrap reduces clogging or narrowing of the pipe discharging the scrap due to the high adhesiveness of the punching oil on the inner wall of the pipe, thereby improving the overall equipment utilization rate of the entire process.

Hereinafter, devices and a system for implementing the manufacturing method according to an embodiment of the present disclosure will be described in more detail.

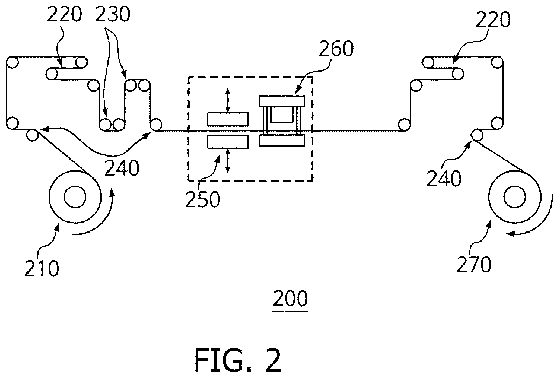

FIG. 2 is a schematic diagram illustrating an overall manufacturing process for an electrode plate for a secondary battery according to an embodiment of the present disclosure.

Referring to FIG. 2, a system 200 for manufacturing an electrode plate for a secondary battery may include an un-winder roller 210, a dancer 220, a guider 230, an edge position controller (EPC) 240, a stamp punching oil applicator 250, a notching device 260, and a re-winder roller 270.

Through the operation of the un-winder roller 210, which unwinds the wound electrode plate, and the re-winder roller 270, which rewinds the electrode plate after the process has been completed, the electrode plate may be moved in a consistent direction and speed. This allows for a continuous feeding of the electrode plates, enabling the process to be carried out continuously.

The dancer 220 may serve to control the amount of tension applied to the electrode plate such that the electrode plate is fed at a certain range of tension. For example, a change in the amount of tension applied to the electrode plate fed through the guider 230 causes vertical or horizontal movements of the dancer 220, and such movement may be detected by a sensor or a controller to adjust the rotation speed and torque of the un-winder roller 210 and the re-winder roller 270.

The EPC 240 may serve to adjust the position of the electrode plate to accurately maintain the alignment of the electrode plate by detecting the edge lines of the electrode plate during the movement of the electrode plate using an optical sensor, a laser sensor, or the like. The dancer 220, the guider 230, and the EPC 240 may have various positions and arrangement sequences depending on the manufacturing system, and a plurality of each of them may be provided.

The stamp punching oil applicator 250 may serve to apply the punching oil to the provided electrode plate. The structure and operation of the stamp punching oil applicator 250 according to an embodiment will be described later.

The notching device 260 may notch along the punching oil applied onto the electrode plate. The notching device 260 may include a mold device used for the notching process. For example, the notching device 260 may include a notching press using a hydraulic or pneumatic cylinder or the like, a mold and a base for mounting the mold, a system for controlling the position, depth, and pattern of the notch, and a safety device.

Additionally, the system 200 for manufacturing the electrode plate for the secondary battery may include a clamp-type feeding device and a suction device for transferring the electrode plate, a vision inspection device for inspecting the electrode plate, an NG indication device, and the like.

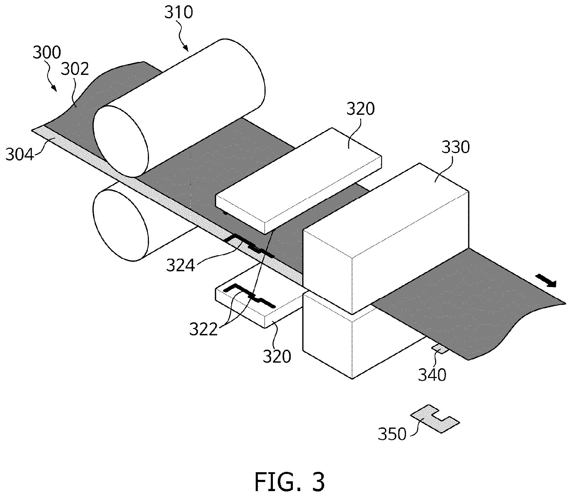

The stamp punching oil applicator 250 and the notching device 260 of the system 200 for manufacturing the electrode plate for the secondary battery included in the dotted box shown in FIG. 2 will be described in more detail with reference to FIG. 3.

FIG. 3 is a schematic diagram of the EPC, the stamp punching oil applicator, and the notching device, according to an embodiment of the present disclosure.

As illustrated in FIG. 3, an active material layer 302 and an uncoated portion 304 may be formed (e.g., defined) on a substrate of an electrode plate 300 corresponding to a current collector. The active material layer 302 refers to a region of the substrate where a positive electrode active material or a negative electrode active material is applied onto the substrate of the electrode plate 300, and the uncoated portion 304 refers to a remaining region of the substrate of the electrode plate 300 where neither the positive electrode active material nor the negative electrode active material are applied. The electrode plate 300 may be held in alignment by an EPC 310 during the movement of the electrode plate 300 in one direction. As the uncoated portion 304 of the electrode plate 300 is aligned and moved toward the stamp blocks 320, an application pattern 324 of the punching oil may be formed repeatedly and continuously on the electrode plate 300. The EPC 310 shown in FIG. 3 is merely an example, and the position and arrangement of the rollers of the EPC 310 for adjusting the alignment of the electrode plate 300 may be changed and/or adjusted. In addition, the EPC 310 may further include a sensor to detect a position of an edge of the electrode plate 300 and a controller to control an angle and a rotational speed of the rollers of the EPC 310 based on the position detected by the sensor.

The stamp blocks 320 of the stamp punching oil applicator may be composed of a pair of blocks that are arranged to be opposite to each other while being spaced apart from each other with the electrode plate 300 being therebetween. One of the pair of stamp blocks 320, which is disposed above the electrode plate 300, may move downward toward the electrode plate 300, and the other one of the pair of stamp blocks 320, which is disposed below the electrode plate 300, may move upward toward the electrode plate 300. Both of the pair of stamp blocks 320 may move up and down, or only one of the pair of stamp blocks 320 may move upward or downward while the other one may be fixed.

A pad 322 may be formed on each surface of the stamp blocks 320 that face the electrode plate 300, e.g., pads 322 on respective facing surfaces of the stamp blocks 320 may face each other (with the electrode plate 300 therebetween). The pad 322 may have a shape that protrudes from the corresponding stamp block 320, e.g., the pad 322 may be on an inner surface of one of the stamp blocks 320 and may protrude from the inner surface of the one of the stamp blocks 320 toward the other one of the stamp blocks 320. For example, in the case of an upper block of the pair of stamp blocks 320 that is disposed above the electrode plate 300, the pad 322 may be formed to protrude downward from a bottom surface of the upper block. In the case of a lower block of the pair of stamp blocks 320 that is disposed below the electrode plate 300, the pad 322 may be formed to protrude upward from a top surface of the lower block. For example, if the pads 322 are formed on both of the pair of stamp blocks 320, the shapes of the pads 322 may correspond to each other. In another example, the pad 322 may be formed on only one of the pair of stamp blocks 320.

Each pad 322 may absorb the punching oil. The pad 322 may be made of a porous material, and a pump may be provided to feed the punching oil to the pad 322. For example, referring to FIG. 3, the pads 322 may be formed on portions of the stamp blocks 320 that overlap, for example only, the uncoated portion 304 of the electrode plate 300. By, for example vertically, moving the pair of pads 322 (e.g., by moving the pair of pads 322 toward each other), which are arranged to be opposite to each other while being spaced apart from each other with the electrode plate 300 in between, to approach the electrode plate 300, the punching oil (absorbed within the pads 322) may be applied onto respective opposite surfaces (e.g., top and bottom surfaces) of the electrode plate 300. The shape of the pads 322 may determine an application pattern 324 of the punching oil on the top and the bottom surfaces of the electrode plate 300. In another example, the application pattern 324 of the punching oil may be applied to the top surface or the bottom surface of the electrode plate 300 only.

The electrode plate 300 coated with the application pattern 324 of the punching oil may be transferred to the notching device 330. The notching device 330 may cut (e.g., notch) the electrode plate 300 (e.g., the uncoated portion 304) according to the application pattern 324 of the punching oil. After the notching process, the uncoated portion 304 may be separated into a lead tab 340 and a scrap 350.

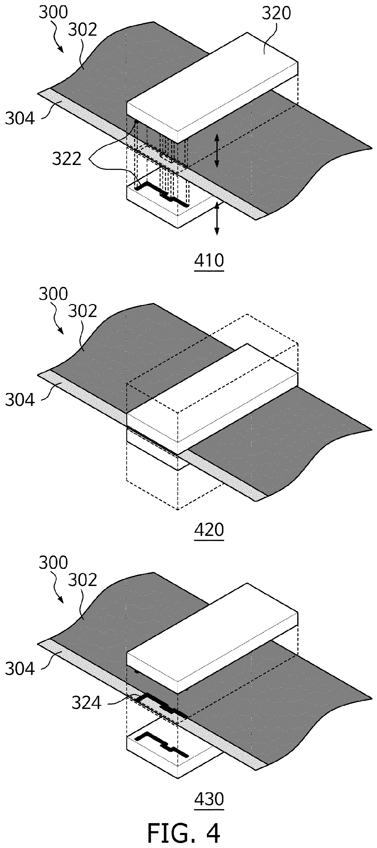

FIG. 4 is a schematic diagram illustrating the operation of applying a punching oil onto the electrode plate 300 for a secondary battery by a stamp punching oil applicator according to an embodiment of the present disclosure.

In a first operation 410, the electrode plate 300 may be fed to the stamp blocks 320 of the stamp punching oil applicator. For example, the electrode plate 300 may be fed to a space between the pair of stamp blocks 320 arranged to be opposite to each other while being spaced apart from each other. The electrode plate 300 may have the active material layer 302 and the uncoated portion 304. The electrode plate 300 may be moved and positioned to allow a region of the electrode plate 300 that requires the punching oil application to be disposed above and below the pads 322 formed on the stamp blocks 320. For example, the electrode plate 300 may be provided such that the projection of the pads 322 formed on the stamp blocks 320 aligns with the region requiring the punching oil application, e.g., the pads 322 may be arranged to face and overlap opposite surfaces of the uncoated portion 304 of the electrode plate 300. In addition, the punching oil may be fed to the pads 322 through a pump, so that the pads 322 may be in a state of absorbing the punching oil (e.g., the pads 322 may be saturated or impregnated with the punching oil).

Next, in a second operation 420, the stamp blocks 320 may be moved toward each other (e.g., the stamp blocks 320 may move vertically along a direction vertically perpendicular to the movement direction of the electrode plate 300 or along a direction vertically perpendicular to the surface of the electrode plate 300). For example, the stamp blocks 320 may be moved up and down until the pads 322 formed on the stamp blocks 320 make contact with the electrode plate 300. Upon contact with the electrode plate 300, the punching oil absorbed by the pads 322 is transferred to the electrode plate 300 (e.g., to the uncoated portion 304 of the electrode plate 300), forming the application pattern 324 of the punching oil on the uncoated portion 304 of the electrode plate 300. A part of the application pattern 324 of the punching oil formed on the electrode plate 300 may be formed at the boundary region between the uncoated portion and the active material layer. In addition, a part of the application pattern 324 of the punching oil may be formed in the width direction of the uncoated portion 304. During the second operation 420, the electrode plate 300 may stop moving.

The stamp blocks 320 may adjust the intensity of the pressure applied to the electrode plate 300 by a stopper. The stopper may be a device that controls the position and movement of the stamp blocks 320 and prevents unexpected movements. The stopper may control the movement of the stamp blocks 320 by incorporating screws or steps in a press device that controls the vertical movement of the stamp blocks 320. In another example, the stopper may be implemented in a manner that is integrated with and programmed into a press control system.

In a third operation 430, the stamp blocks 320 may return to their original position (e.g., move away from each other and away from the electrode plate 300). At this time, the electrode plate 300 may retain the applied application pattern 324 of the punching oil from the pads 322. During the return of the stamp blocks 320 to their original position, the electrode plate 300 may start to move again (e.g., after being stationary during the second operation 420).

By sequentially repeating the first operation 410 to the third operation 430, the process of applying the punching oil onto the electrode plate 300 may be continuously performed. In this process, feeding the electrode plate 300 in the first operation 410 may include adjusting the moving speed of the electrode plate 300 based on the length of the application pattern of the punching oil. For example, in a case where the length of the application pattern of the punching oil is 10 cm and the time taken from the first operation 410 to the third operation 430 is 10 seconds, the electrode plate 300 may move 10 cm in 10 seconds.

FIG. 4 illustrates that the pads 322 are respectively formed on the upper and lower stamp blocks 320, but only one of the upper and lower stamp blocks 320 may have the pad thereon. Accordingly, the application pattern 324 of the punching oil may be applied to both of a top surface and a bottom surface of the electrode plate 300, or the application pattern 324 of the punching oil may be applied only to one of the top surface and the bottom surface of the electrode plate 300.

For example, as illustrated in FIG. 4, the uncoated portion 304 may be formed on only one of two edge portions of the electrode plate 300. In another example, the uncoated portion 304 may be formed on both edge portions of the electrode plate 300, and if desired, the punching oil may be applied in the same manner to both edge portions of the electrode plate 300.

FIG. 5 is a schematic diagram illustrating a notching operation of an electrode plate for a secondary battery by a notching device according to an embodiment of the present disclosure. FIG. 5 illustrates an enlarged partial top view of the electrode plate 300 in FIG. 4.

Referring to FIG. 5, a first region 510 (i.e., where a punching oil application pattern 520 is formed on the electrode plate 300) may include a cutting section 512, a non-electrode section 514, and an electrode section 516. The punching oil application pattern 520 in FIG. 5 may be substantially the same as the application pattern 324 in FIG. 4.

The punching oil application pattern 520 refers to a minimum unit pattern that is repeatedly formed on the electrode plate 300. The sections of the punching oil application pattern 520 may be divided from one another based on the width of the electrode plate 300, or the sections may be divided from one another based on the horizontally perpendicular direction to the movement direction of the electrode plate 300. The order and number of the cutting section 512, the non-electrode section 514, and the electrode section 516 may be varied, and partial application patterns formed in the above respective sections may be connected to one another to form the punching oil application pattern 520. The length of the punching oil application pattern 520 may correspond to the length of the first region 510 (e.g., along the movement direction of the electrode plate 300 indicated by the arrow in FIG. 5).

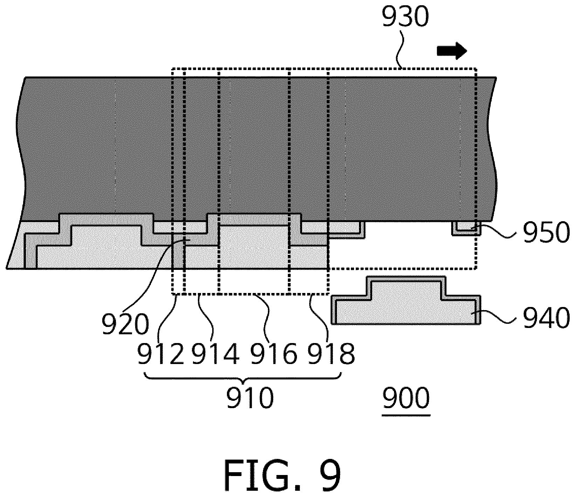

In the cutting section 512, the entire region of the uncoated portion 304 or the uncoated portion 304 except for a region of the tab shape may be coated with the punching oil. For example, as illustrated in FIG. 5, in the cutting section 512, the punching oil may be applied to the entire uncoated portion 304 in a direction horizontally perpendicular to the movement direction of the electrode plate 300. Further, the punching oil may also be applied to the boundary region between the uncoated portion 304 and the active material layer 302. The boundary region between the uncoated portion 304 and the active material layer 302 is the region where the uncoated portion 304 and the active material layer 302 are in contact, and the boundary region may include a part of the uncoated portion 304 and a part of the active material layer 302 together, or may include only a part of the uncoated portion 304. For the cutting section 512, the notching device may cut (e.g., notch) the electrode plate 300 in the direction horizontally perpendicular to the movement direction of the electrode plate 300. In another example, a partial region of the uncoated portion 304 may not be coated with the punching oil within the allowable tolerance range. In yet another example, in the cutting section 512, the punching oil may be applied to the uncoated portion 304 except for a region of the tab shape, which will be described in more detail, below, with reference to FIG. 9.

In the non-electrode section 514, a partial region of the uncoated portion 304 may be coated with the punching oil. For example, the punching oil may be applied along the movement direction of the electrode plate 300 in the non-electrode section 514. That is, in the non-electrode section 514, the punching oil may be applied, e.g., only, onto the boundary region between the uncoated portion 304 and the active material layer 302 along the movement direction of the electrode plate 300. Thus, the punching oil is applied to the partial region of the uncoated portion 304. For example, as illustrated in FIG. 5, a plurality of the non-electrode sections 514 may be formed in the first region 510 while being spaced apart from each other (e.g., one non-electrode section 514 in FIG. 5 is separated from the electrode plate 300, while another non-electrode section 514 in FIG. 5 is attached to the electrode plate 300). In another example, a plurality of the non-electrode sections 514 may be formed in the first region 510 while being continuous with each other to form a single continuous section. For the non-electrode section 514, the notching device may cut (e.g., notch) the electrode plate 300 in the movement direction of the electrode plate 300.

In the electrode section 516, a partial region of the uncoated portion 304 may be coated with the punching oil. For example, in the electrode section 516, the punching oil may be applied onto a partial region of the uncoated portion 304 along the shape of a lead tab. In the electrode section 516, the boundary region between the uncoated portion 304 and the active material layer 302 may be partially coated with the punching oil. That is, some part of the boundary region may be coated with the punching oil and some part of the boundary region may not be coated with the punching oil.

The electrode section 516 corresponds to a section that remains after the notching process, which includes the lead tab. In an embodiment, the shape of the lead tab 550 may be rectangular protruding from the boundary region between the uncoated portion 304 and the active material layer 302. Therefore, the punching oil application pattern 520 may include corner shapes 522. For example, as shown in FIG. 5, the shape of the lead tab 550 may be rectangular.

In an embodiment, the width of the punching oil application pattern 520 may be 3 mm or less. Additionally, the length or proportion of each of the cutting section 512, the non-electrode section 514, and the electrode section 516 in the first region 510 may be varied to the extent that the typical lead tab 550 may be formed using the method disclosed in the present disclosure.

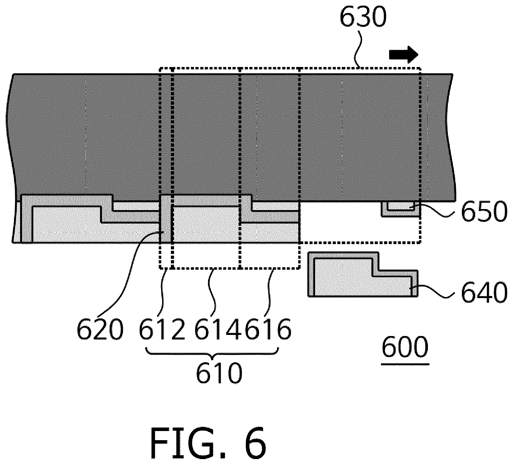

In an embodiment, the punching oil application pattern 520 may vary depending on the addition of new sections or changes in the sequence of the cutting section 512, the non-electrode section 514, and the electrode section 516. Various embodiments of the punching oil application pattern 520 will be described in detail with reference to FIGS. 6 to 9.

In an embodiment, the punching oil application pattern 520 may be formed repeatedly on the electrode plate 300, so that a plurality of the patterns may be formed and interconnected. For example, as shown in FIG. 5, a first application pattern may be formed in the first region 510, and a second application pattern having the same shape as the first application pattern may be formed in a second region 530 prior to the first application pattern. The second region 530 corresponds (e.g., may be adjacent and directly connected) to the first region 510, and a cutting section of the second region 530 may be connected uninterruptedly with the non-electrode section 514 of the first region 510.

FIG. 5 also illustrates a result of a notching process in the second region 530 in which the electrode plate 300 is notched according to a punching oil application pattern formed in the second region 530. The notching device may cut the electrode plate 300 along a center line of the punching oil application pattern such that the punching oil may remain on a part of the electrode plate 300 even after the cutting. After the notching process, the lead tab 550 composed of a remaining uncoated portion connected to the active material layer 302 after the cutting may be formed. Further, the scrap 540 may be generated after the notching process.

FIGS. 6 to 9 are schematic diagrams illustrating punching oil application patterns according to various embodiments of the present disclosure. Repetitive description regarding the configurations corresponding to FIG. 5 among those disclosed in FIGS. 6 to 9 will be omitted.

As shown in FIG. 6, in a modified embodiment 600, a first region 610 (i.e., where a punching oil application pattern 620 may be formed) may include a cutting section 612, a non-electrode section 614, and an electrode section 616 arranged sequentially along the movement direction of the electrode plate. For example, the punching oil application pattern 620 may be repeatedly formed and connected to each other on the electrode plate. Further, a punching oil application pattern having the same shape as the punching oil application pattern 620 of the first region 610 may be formed in a second region 630 prior to the punching oil application pattern 620. In the modified embodiment 600, a cutting section of the second region 630 may be connected seamlessly with the electrode section 616 of the first region 610 (e.g., may include less corner shapes than the structure in FIG. 5).

FIG. 6 also illustrates a result of a notching process in the second region 630 in which the electrode plate is notched according to the punching oil application pattern formed in the second region 630. After the notching process, a lead tab 650 and a scrap 640 may be formed. The lead tab 650 may be composed of a remaining uncoated portion connected to an active material layer after the cutting.

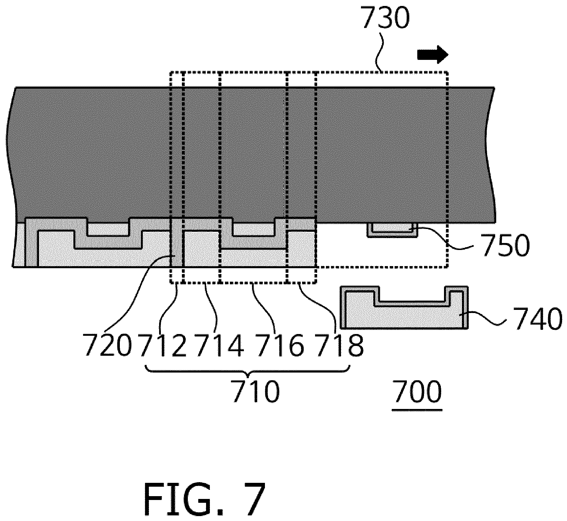

As shown in FIG. 7, in another modified embodiment 700, a first region 710 (i.e., where a punching oil application pattern 720 may be formed) may include a cutting section 712, a first non-electrode section 714, an electrode section 716, and a second non-electrode section 718 arranged sequentially along the movement direction of the electrode plate. For example, the punching oil application pattern 720 may be repeatedly formed and connected to each other on the electrode plate. Further, a punching oil application pattern having the same shape as the punching oil application pattern 720 of the first region 710 may be formed in a second region 730 prior to the punching oil application pattern 720. As illustrated in FIG. 7, a cutting section of the second region 730 may be connected seamlessly with the second non-electrode section 718 of the first region 710.

FIG. 7 also illustrates a result of a notching process in the second region 730 in which the electrode plate is notched according to the punching oil application pattern formed in the second region 730. After the notching process, a lead tab 750 and a scrap 740 may be formed. The lead tab 750 may be composed of a remaining uncoated portion connected to an active material layer after the cutting.

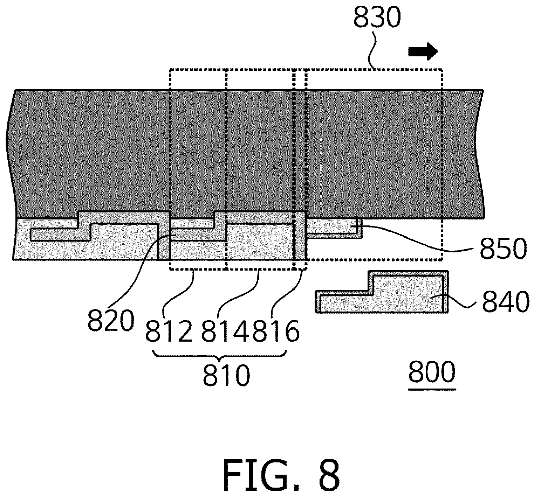

As shown in FIG. 8, in yet another modified embodiment 800, a first region 810 (i.e., where a punching oil application pattern 820 may be formed) may include an electrode section 812, a non-electrode section 814, and a cutting section 816 arranged in sequence along the movement direction of the electrode plate. For example, the punching oil application pattern 820 may be repeatedly formed and connected to each other on the electrode plate. Further, a punching oil application pattern having the same shape as the punching oil application pattern 820 of the first region 810 may be formed in a second region 830 prior to the punching oil application pattern 820. As illustrated in FIG. 8, an electrode section of the second region 830 may be connected seamlessly with the cutting section 816 of the first region 810.

FIG. 8 also illustrates a result of a notching process in the second region 830 in which the electrode plate is notched according to the punching oil application pattern formed in the second region 830. After the notching process, a lead tab 850 and a scrap 840 may be formed. The lead tab 850 may be composed of a remaining uncoated portion connected to an active material layer after the cutting.

As shown in FIG. 9, in still another embodiment 900, a first region 910 (i.e., where a punching oil application pattern 920 may be formed) may include a cutting section 912, a first electrode section 914, a non-electrode section 916, and a second electrode section 918 arranged in sequence along the movement direction of the electrode plate. In the cutting section 912, the entire region of the uncoated portion 304 except for a region that remains as a lead tab is coated with the punching oil. For example, in the cutting section 912, the punching oil may be applied to a partial region of the uncoated portion 304 in a direction horizontally perpendicular to the movement direction of the electrode plate.

Specifically, the punching oil application pattern 920 may be repeatedly formed and connected to each other on the electrode plate. Further, a punching oil application pattern having the same shape as the punching oil application pattern 920 of the first region 910 may be formed in a second region 930 prior to the punching oil application pattern 920. As illustrated in FIG. 9, a cutting section of the second region 930 may be connected seamlessly with the second electrode section 918 of the first region 910.

FIG. 9 also illustrates a result of a notching process in the second region 930 in which the electrode plate is notched according to the punching oil application pattern formed in the second region 930. After the notching process, there may be formed a lead tab 950 composed of a remaining uncoated portion after the cutting, which is formed by combining a first electrode section of the second region 930 and a second electrode section of a preceding region and is connected to an active material layer. Additionally, a scrap 940 composed of an uncoated portion that fails to form the lead tab 950 may be formed.

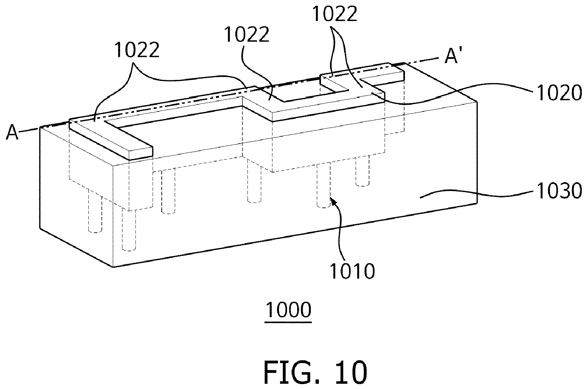

FIG. 10 is a schematic diagram illustrating an example of a stamp punching oil applicator 1000 according to an embodiment of the present disclosure. In an embodiment, the stamp punching oil applicator 1000 may include pumps 1010 that feed the punching oil, a pad 1020 connected to the pumps 1010 to absorb the punching oil, and a stamp block 1030 that supports the pad 1020. For example, as illustrated in FIG. 10, the stamp punching oil applicator 1000 may include only one stamp block 1030. In another example, the stamp punching oil applicator 1000 may include a pair of stamp blocks 1030, e.g., configured symmetrically to each other.

In an embodiment, each pump 1010 may be inserted into the interior of the stamp block 1030 such that one end of a pipe forming the pump 1010 may be connected to the pad 1020. For example, the pump 1010 may be a syringe pump. In another example, the pump 1010 may be formed into any suitable shape to ensure smooth feeding of the punching oil to the pad 1020.

In an embodiment, the pad 1020 may be formed to protrude from one surface of the stamp block 1030. The pad 1020 may be made of a porous material. For example, the porous material may include polyurethane. Polyurethane is a hydrophilic porous material that can be used in a 100 °C environment. Polyurethane can maintain high absorbency and water retention even in a dry state and can be processed to provide excellent chemical resistance to salts, alcohols, acids, and alkalis. In an embodiment, the processed porous material may have a pore diameter of 25 µm, an apparent density of 0.21 g/cm³, and a porosity of 83%. For example, the pad 1020 may be formed into various shapes in view of efficiently absorbing and applying the punching oil.

In an embodiment, the shape of the pad 1020 may vary depending on the punching oil application patterns that are shown, by way of example only, in FIGS. 6 to 9. For example, the shape of the pad 1020 may include corner shapes 1022. Additionally, the width of the pad 1020 may be 3 mm or less, and the protruding thickness of the pad 1020 may be 1 mm or less.

In an embodiment, the stamp block 1030 may be moved up and down in a direction, which is vertically perpendicular to a surface of the electrode plate on which the active material layer and the uncoated portion are formed, to thereby apply the punching oil absorbed by the pad 1020 to a partial region of the uncoated portion. The stamp block 1030 may also adjust the intensity of the pressure applied to the electrode plate by a stopper. Further, the pump 1010 and the stopper may optimize the amount of punching oil consumed in the notching process. As a result, the operating costs of the notching process may be reduced.

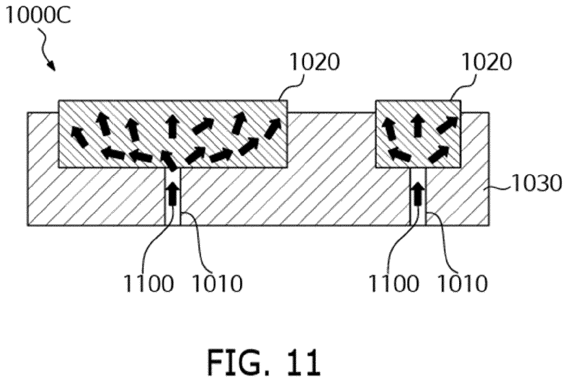

FIG. 11 is a cross-sectional view of a stamp punching oil applicator 1000C taken along line A-A' of FIG. 10. In an embodiment, the punching oil 1100 may be fed in a fixed amount to the pad 1020 through the pumps 1010 inserted into the interior of the stamp block 1030 prior to the application of the punching oil. The punching oil may be fed in a fixed amount to the pad 1020 through the pumps 1010 according to a predetermined number of applications. For example, in a case where the amount of punching oil applied per application is 5 ml, and six applications are made in one minute, the punching oil 1100 may be continuously fed through the pumps 1010 at a rate of 0.5 ml/s. In another example, the punching oil 1100 may be fed in a fixed amount of 5 ml at 10 second intervals. For example, various methods may be employed to feed the punching oil 1100 in view of facilitating the manufacturing process of the electrode plate for the secondary battery.

If an electrode plate including an active material layer and an uncoated portion were to be coated via a spray directly applied to the uncoated portion (e.g., rather than via stamp blocks with pads according to embodiments), the entire uncoated portion would be coated with a punching oil, followed by molding the sprayed uncoated portion into the shape of a lead tab through a notching process. However, a scrap generated during the notching process would also be coated with a large amount of the punching oil (as the entire uncoated portion would be coated with the punching oil), resulting in high consumption of punching oil, high cost of manufacturing the pole electrode, and easy clogging of the scrap discharge pipe.

In contrast, a secondary battery cell according to embodiments may include an electrode plate for a secondary battery manufactured by a manufacturing method where a smaller amount of punching oil may be used (e.g., due to use of pads). The secondary battery cell may be employed in automobiles, mobile phones, and/or various types of electrical devices.

The secondary battery cell may include an electrode assembly, a first current collector, a first terminal, a second current collector, a second terminal, a case, and a cap assembly. Among these, the electrode plate used in the electrode assembly may be manufactured according to the manufacturing method according to an embodiment of the present disclosure.

An electrode assembly may be formed by winding or stacking a stack of a first electrode plate, a separator, and a second electrode plate, which are formed as thin plates or films. When the electrode assembly is a wound stack, a winding axis may be parallel to the longitudinal direction (e.g., the y direction) of the case. In other embodiments, the electrode assembly may be a stack type rather than a winding type, and the shape of the electrode assembly is not limited in the present disclosure. In addition, the electrode assembly may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may act as a current flow path between the first electrode plate and the first current collector. The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab may act as a current flow path between the second electrode plate and the second current collector. The first electrode tab of the first electrode plate and the second electrode tab of the second electrode plate may be respectively positioned at both ends (e.g., opposite ends) of the electrode assembly. In some embodiments, the electrode assembly may be accommodated in the case along with an electrolyte. In addition, in the electrode assembly, the first current collector and the second current collector may be welded and connected to the first electrode tab of the first electrode plate and the second electrode tab of the second electrode plate exposed on both sides, respectively, to then be positioned thereat, respectively.

The separator prevents a short circuit between the first electrode and the second electrode while allowing movement of lithium ions therebetween. The separator may be made of, for example, a polyethylene film, a polypropylene film, a polyethylene-polypropylene film, or the like.

The case accommodates the electrode assembly and, together with the cap assembly, forms the external appearance of the secondary battery. The case may be configured in various shapes, such as a circular shape and a pouch shape. Further, the case may be made of a metal, such as aluminum, aluminum alloy, or nickel-plated steel, a laminated film, or plastic (e.g., in a pouch-type embodiment).

The cap assembly may be fixed to the inside of the crimping part by a gasket to seal the case. The cap assembly may include a cap up, a safety vent, a cap down, an insulating member, and a sub plate but is not limited thereto and may be modified in various ways.

Although the present disclosure has been described above with respect to embodiments thereof, the present disclosure is not limited thereto. Various modifications and variations can be made thereto by those skilled in the art within the scope of the appended claims.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

By way of summation and review, a punching oil may be sprayed onto the entire uncoated portion of the substrate of the electrode plate to prevent adhesion during mold notching. However, application of the punching oil to portions (regions) of the substrate of the electrode plate that cannot be reached by the mold, a long drying time for the punching oil, and a large amount of punching oil applied to scrap generated after mold notching, which may clog a scrap discharge pipe, may increase operating costs. In contrast, embodiments of the present disclosure provide a stamp punching oil applicator and a method for manufacturing an electrode plate for a secondary battery using the stamp punching oil applicator to reduce manufacturing costs.

According to the embodiments of the present disclosure, by applying the punching oil along the shape of the lead tab, it is possible to avoid applying the punching oil to regions that are not required for the mold notching. Further, the amount of punching oil consumed in the notching process may be optimized through the pump and the stopper. Accordingly, operating costs consumed in the notching process may be reduced.

According to the embodiments of the present disclosure, a smaller amount of punching oil is applied, compared to related art, to the scrap generated after the mold notching, so that post-treatment of the scrap may be performed smoothly. Specifically, the decrease in the amount of punching oil remaining in the scrap reduces clogging or narrowing of the pipe discharging the scrap due to the high adhesiveness of the punching oil on the inner wall of the pipe, thereby improving the overall equipment utilization rate of the entire process.

According to the embodiments of the present disclosure, a smaller amount of punching oil is applied, compared to related art, to a lead tab produced after the mold notching, so that the punching oil may be dried more quickly. As a result, lead tab folding defects may be reduced, and contamination of process equipment by the active materials and the punching oil may be minimized.

According to the embodiments of the present disclosure, by employing a stamping method for the application of the punching oil, the application amount of the punching oil may be reduced, and precise control may be conducted to ensure that the appropriate amount of the punching oil is applied.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A method for manufacturing an electrode plate for a secondary battery, the method comprising:
feeding the electrode plate (300) to a stamp block (320) with a pad (322), the electrode plate (300) including an active material layer (302) and an uncoated portion (304);
applying a punching oil absorbed in the pad (322) to a partial region of the uncoated portion (304) of the electrode plate (300); and
notching the electrode plate (300) along the partial region where the punching oil is applied.

2. The method as claimed in claim 1, wherein:
a region to which the punching oil is applied includes a cutting section (512), a non-electrode section (514), and an electrode section (516), and
the punching oil is applied to a partial region of the uncoated portion (304) in the non-electrode section (514) and a partial region of the uncoated portion (304) in the electrode section (516).

3. The method as claimed in claim 2, wherein the punching oil is applied to only a part of a boundary region between the active material layer (302) and the uncoated portion (304) in the electrode section (516).

4. The method as claimed in claim 3, wherein, in the electrode section (516), an application pattern (520) of the punching oil includes a corner shape (522).

5. The method as claimed in any one of the preceding claims, wherein a width of an application pattern (520) of the punching oil is 3 mm or less.

6. The method as claimed in any one of the preceding claims, wherein:
feeding the electrode plate (300) includes adjusting a moving speed of the electrode plate (300) based on a length of an application pattern (520) of the punching oil, and
applying the punching oil includes repeatedly applying the punching oil so that the application pattern (520) of the punching oil is repeatedly and continuously formed.

7. A secondary battery cell, comprising the electrode plate (300) for the secondary battery manufactured by the method as claimed in any one of the preceding claims.

8. A stamp punching oil applicator (1000) for applying a punching oil to an electrode plate including an active material layer and an uncoated portion, the stamp punching oil applicator comprising:
a pump (1010) configured to feed the punching oil;
a pad (1020) connected to the pump (1010), the pad (1020) being made of a porous material and being configured to absorb the punching oil from the pump (1010); and
a stamp block (1030) that supports the pad (1020), the stamp block (1030) being configured to move in a direction perpendicular to a surface of the electrode plate, and being configured to apply the punching oil absorbed in the pad (1020) to a partial region of the electrode plate.

9. The stamp punching oil applicator (1000) as claimed in claim 8, wherein the pump (1010) is configured to feed the punching oil in a fixed amount to the pad (1020), according to a predetermined number of applications.

10. The stamp punching oil applicator (1000) as claimed in claim 8 or claim 9, wherein the porous material of the pad contains polyurethane.

11. The stamp punching oil applicator as claimed in any one of claims 8 to 10, wherein the stamp block includes a stopper configured to adjust an intensity of a pressure applied to the electrode plate.

12. The stamp punching oil applicator (1000) as claimed in any one of claims 8 to 11, wherein the pad (1020) protrudes from a surface of the stamp block (1030), a width of the pad (1020) being 3 mm or less, and a protruding thickness of the pad (1020) being 1 mm or less.

13. The stamp punching oil applicator (1000) as claimed in any one of claims 8 to 12, wherein:
a region of the electrode plate (300) applied with the punching oil includes a cutting section (512), a non-electrode section (514), and an electrode section (516), the pad (1020) including parts corresponding to the cutting section (512), the non-electrode section (514), and the electrode section (516) of the electrode plate (300), and
the stamp block (1030) being configured to apply the punching oil to a partial region of the uncoated portion (304) in the non-electrode section (514) and a partial region of the uncoated portion (304) in the electrode section (516) via the pad (1020).

14. The stamp punching oil applicator (1000) as claimed in claim 13, wherein the stamp block (1030) is configured to apply the punching oil only to a part of a boundary region between the active material layer and the uncoated portion (304) in the electrode section (300).

15. The stamp punching oil applicator (1000) as claimed in claim 14, wherein the pad (1020) is shaped to include a corner shape (1022).
